# EUROPEAN PATENT SPECIFICATION

(11) **EP 3 037 451 B1**
(45) Date of publication and mention of the grant of the patent: **30.08.2017**
(21) Application number: 15202640.7
(22) Date of filing: 23.12.2015
(51) Int. Cl.: C08G 59/18, B44C 1/17, B44C 1/175, C09J 163/00

(54) **BINDING COMPOSITION FOR DECALS**
BINDEMITTEL FÜR ABZIEHBILDNER
COMPOSITION DE LIANT POUR DECALCOMANIES

(30) Priority: 23.12.2014 IT BO20140722
(43) Date of publication of application: 29.06.2016
(73) Proprietor: Cabro S.p.A., 52100 Arezzo (IT)
(72) Inventor: BETTI, Francesca, 52100 AREZZO (IT)
(74) Representative: Mangini, Simone

(56) References cited:
- WO-A2-2015/083123
- GB-A- 1 437 326
- US-A- 4 348 505
- US-A- 5 025 100
- US-A1- 2001 018 483
- DATABASE WPI Week 198636 Thomson Scientific, London, GB; AN 1986-235260 XP002744040, & JP S61 163971 A (NIPPON STEEL CORP) 24 July 1986 (1986-07-24)

## Description

### TECHNICAL FIELD

The present invention relates to a method of preparing a binding composition, a binding composition, a formulation for decals and uses of the binding composition.

The present invention furthermore relates to a decal.

### BACKGROUND OF THE INVENTION

Noble metal-based colours for the decoration of glass and ceramic have been described in detail in the article by G. Landgraf in "Gold: Progress in Chemistry Biochemistry and Technology", Edited by Hubert Schmidbaur, 1999, John Wiley & Sons Ltd.. Further articles on this theme can be found in LB. Hunt, Gold Bull. 12, (1979), 116 or G. Paret and G. Landgraf, Handbuch der Keramik, Gr. IG3 (1981).

Precious metal formulations, in both liquid and paste form, have been used for many years for the decoration of different types of substrates like glass, ceramic, porcelain, tiles and other silicate-based substrates. These preparations generally contain one or more organic compounds of precious metals which are substantially soluble in an organic medium: typical organic compounds of precious metals include resinates, in particular sulforesinates. Furthermore, these preparations contain one or more solutions of organometallic compounds such as resinates, carboxylates and alkoxides of elements like Rh, Bi, Cr, V, Ni, Co, Fe, Sn, Zr, Ta, Si, B and Al which influence the formation and adhesion of the film to the substrate. The rest of the formulation is represented by a combination of at least one solvent and one ligand.

The precious metal formulations can be applied on a substrate via numerous methods, for example by means of a hand brush, neoprene printing or pad printing. Of these methods, application by means of screen printing (silk screen printing) processes in particular and indirect screen printing processes (indirect silk screen printing), also called decals, are certainly very interesting.

The application of decals entails a decorative layer comprising a precious metal formulation being applied directly to a decal support, in particular paper provided with a coating, such as carboxymethyl cellulose, soluble in water.

The precious metal formulations for application by indirect screen printing should contain a ligand such as to provide some special characteristics for the preparation. Firstly, after printing on the decal paper, the decorative layer should have acceptable drying times (less than 2 hours) to allow rapid application of the coating. Note, however, that the drying should not be too quick, as in this case there may not be sufficient time to transfer the precious metal formulations onto the decal paper. Furthermore, the decorative layer must not dissolve in water, so that after it has been wetted with water, it separates from the support without being damaged. The decorative layer must furthermore be characterized by good flexibility so that it can be applied to substrates which then undergo firing without the decorated subject being damaged.

Many of the formulations currently available do not present the above characteristics in a satisfactory manner.

In several cases the use of polyaminoamides has been proposed. Both non-reactive polyamides and reactive polyamides can be used, according to the patent literature, for the production of noble metal-based bright pastes.

According to the document EP 0972793 A2 the preferred binders for noble metal-based pastes are polyamide resins, in a mixture with a plurality of other resins. However, the noble metal-based bright pastes produced with said polyamide resins have some drawbacks.

Polyamide resins with a higher molecular weight are not always compatible with the gold sulforesinates and the solvents used for the production of noble metal-based pastes, which results in opacification of the fired gilded decoration.

The elasticity of the pastes is often not sufficient, so that during the transfer, if the decals are significantly stretched, small cracks can form.

The conservation stability of the decals is not sufficient, since over time embrittlement occurs which also leads to the formation of cracks.

Often the adhesion of the noble metal-based bright pastes to the transfer paint is not optimal and, for this reason, during the transfer detachments of parts of the gilded preparation can occur.

To eliminate these drawbacks, the document EP 1559693 suggests the use of reactive polyamides (polyaminoamides) as binders in the noble metal-based pastes for direct and indirect screen printing. Normally these binders are used as hardeners for epoxy resins in the paint industry, but in this case they are used as a sole binder. In this patent, in particular, polyamides that can be obtained from a condensation reaction between a polymer fatty acid and a polyethylene polyamine are described as preferred. They are characterized by free amine groups in the main chain. However, also the formulations proposed by this document have proved to be decidedly unsatisfactory.

The drawbacks of this type of binder are the following. The binders can range from liquid to sticky and therefore only part of the products are suitable for the purpose, because in the case of the use of liquid binders, the necessary physical drying of the noble metal-based pastes is not possible. A further part of these binders are partially soluble in water, so that in the event of prolonged soaking in water of the decals there is the risk of the noble metal-based printed paste dissolving and, after a while, detaching from the transfer paint. For this reason, reactive polyamides with high molecular weight ranging from viscous to semi-solid are used almost exclusively. A further drawback lies in the high reactivity of the free amine groups which can lead to uncontrollable gelation reactions of the pastes. To avoid this problem, according to the document EP1559693 B1, the reactive polyamide is "deactivated". The deactivation takes place by reaction with acids, for example acetic acid, propionic acid, ethyl hexanoic acid, or with epoxides. According to the inventor's instructions, a molar excess of the deactivators of 2-5 times is advised.

Despite these deactivations, often the noble metal-based pastes cannot be stabilized. In the case of prolonged conservation and subsequent use, increases in the viscosity can occur which make further use impossible, because the pastes can no longer be screen printed.

GB1437326 discloses a decalcomania comprising a layer of adhesive over ink indicia on a temporary support or ink indicia on a support film transferable with the indicia. The ink indicia and/or the support film comprises a material which includes epoxy polymer which has been formed in situ on the temporary support.

US2001018483 relates to a noble metal preparation for producing noble metal decorations on decoratively fireable substrates by direct printing and indirect printing (transfer technique).

US5025100 discloses tetrafunctional amine derivatives of digyclidyl ethers of Bisphenol A that are liquid at ambient temperatures and that are useful as curing agents for epoxy resins.

US4348505 discloses a liquid adduct prepared from the reaction of an amine, a polyepoxide compound with a functionality greater than 2, and, optionally, a diglycidyl ether of bisphenol A and/or the hydrogenated equivalent thereof, an accelerator or a suitable solvent; the reaction continuing until no active epoxy groups are available. The adducts are useful as curing agents for epoxy resins in both room temperature and heat cured applications to produce protective coatings of superior properties.

The document XP002744040 (Database WPI, week 198636 - JP S61 163971) discloses that an inner surface of a pipe is coated with a composition of two liquid type comprising the main ingredient consisting of pisphenol type epoxy resin and an hardener comprising polyamide amine adduct.

WO2015083123 relates to a method for preparing a binder composition for a formulation based on precious metals for decals; the method provides for making a polyamine and at least one dicarboxylic acid react to obtain a polyaminoamide.

The object of the present invention is, therefore, to provide a method for the preparation of a binding composition, a binding composition, a formulation for decals, uses of the binding composition and a decal, which overcome, at least partially, the drawbacks of the known art and are at the same time easy and inexpensive to produce.

### SUMMARY

According to the present invention a method of preparing a binding composition, a binding composition, a formulation for decals, uses of the binding composition and a decal as claimed in the following independent claims and, preferably, in any one of the claims depending directly or indirectly on the independent claims, are provided.

By the term "precious metals" we mean metals such as platinum, palladium, silver and gold.

In the present text "Cₓ-C_{y}" refers to a group or a molecule having x to y atoms of carbon.

### DETAILED DISCLOSURE

According to a first aspect of the invention, a method is provided to prepare a binding composition for a (bright) formulation for metal-based, in particular precious metal-based, decals.

The method comprises a first mixing step, during which (at least) one polyamine and (at least) one epoxy compound with at least two epoxy functional groups are mixed together (and a first mixture is obtained).

In particular, during the first mixing step, the polyamine and the epoxy compound react with each other (and an intermediate product is obtained). According to some embodiments, during the first mixing step, heat is provided (to the polyamine and to the epoxy compound, more precisely to the first mixture). In particular, in this way (by means of the heat provided) the polyamine and the epoxy compound react with each other.

Advantageously (but not necessarily), the method comprises an addition step, during which an epoxy resin is added (to the first mixture; more precisely, to the intermediate product). In particular, during the addition step, the first mixture (more precisely, the intermediate product) and the epoxy resin are mixed together (so as to obtain a second mixture).

More in particular, during the addition step, the first mixture (more precisely, the intermediate product) and the epoxy resin react with each other. According to some embodiments, during the addition step, heat is supplied (to the first mixture and to the epoxy resin, more precisely to the second mixture). In particular, in this way (by means of the heat supplied) the first mixture (more precisely the intermediate product) and the epoxy resin react with each other.

According to some embodiments, the addition step is (at least partially) subsequent to the first mixing step. According to some variations, the epoxy resin can be combined with the polyamine and the epoxy compound before they react.

The polyamine is C₂₅-C₄₀ (in particular, C₃₀-C₄₀; more in particular, C₃₂-C₃₈) and has (at least) two amine functional groups. In particular, the polyamine has (at least) two primary amine functional groups.

Advantageously the polyamine comprises (is) (at least) a diamine having a structural formula I:

H₂N-R²-R¹-R³-NH₂ (I)

in which R² and R³ are, each independently of the other, a linear (or branched) aliphatic C₅-C₁₅ (in particular, C₆-C₁₁; more in particular, C₇-C₁₀) and R¹ is an aliphatic C₁₅-C₃₀ (in particular, C₁₆-C₂₂; more in particular, C₁₈-C₂₀).

In this text, "aliphatic" means, unless specified otherwise, a non-aromatic and non-substituted hydrocarbon, saturated or unsaturated, linear, branched and/or cyclic. Non-limiting examples of aliphatic groups are: t-butyl, ethenyl, 1- or 2-propenyl, cyclohexyl.

According to some embodiments, R² and R³ are, each independently of the other, a linear (or branched) alkyl C₅-C₁₅ (in particular, C₆-C₁₁; more in particular, C₇-C₁₀).

In the present text, "alkyl" means a saturated aliphatic (i.e. an aliphatic group without double or triple carbon-carbon bonds). Non-limiting examples of alkyls are: methyl, n-propyl, t-butyl, cyclohexyl.

According to some embodiments, the polyamine comprises a mixture of diamines (each of which, independently of the other, defined as indicated above).

In particular, the polyamine is selected from the group consisting of: Priamine 1074, Priamine 1071, Priamine 1073 and a combination thereof.

In some cases, the polyamine comprises (is) a diamine selected from the group consisting of: 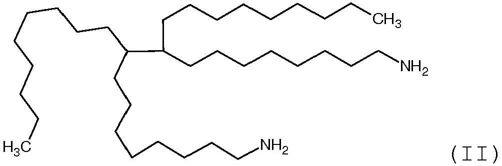 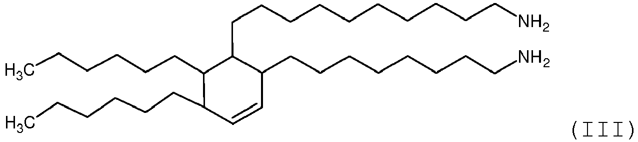 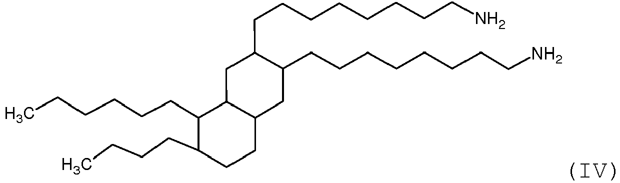 and a combination thereof.

According to specific embodiments, the polyamine is Priamine 1074.

According to some embodiments, the epoxy resin is based on bisphenol A.

In particular, the epoxy resin is selected from the group consisting of: GT 7072 (Huntsman), GY 298 (Huntsman), GY 250 (Huntsman), YD 128 (Kukdo Chemical Co.), YD 017 (Kukdo Chemical Co.), YD172 (Kukdo Chemical Co.), GT 7071 (Huntsman) (and a combination thereof). According to specific embodiments, the epoxy resin comprises (more precisely, is GY 250).

Advantageously, the epoxy compound has a formula V: 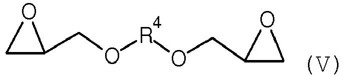 wherein R⁴ is an (aliphatic) C₃-C₁₅ (in particular, C₄-C₁₀; more in particular, C₆-C₁₀). In particular, R⁴ is a C₆-C₁₀ group (more precisely, C₇-C₉). According to specific embodiments, R⁴ comprises (is) a C₄-C₇ ring (in particular, C₅-C₆; more precisely, a cyclohexyl). Advantageously, R⁴ is an alkyl.

According to specific embodiments, the epoxy compound comprises (is) 1,4-cyclohexanedimethanol diglycidyl ether which has formula VI:

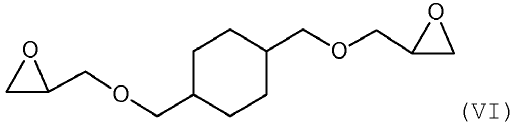

Advantageously (but not necessarily), the method comprises a second mixing step, which is (at least partially) subsequent to the first mixing step and during which an organic acid is added (to the second mixture). According to some embodiments, the organic acid comprises (is) a monocarboxylic acid C₁-C₁₀ (in particular, C₁-C₈). For example, the organic acid is selected from the group consisting of: 2-ethylhexanoic acid, acetic acid, propionic acid and a combination thereof.

According to some embodiments, the organic acid is C₁-C₄ (more precisely, C₂-C₄). In particular, the organic acid is acetic acid and/or propionic acid (in particular, acetic acid).

More precisely, during the second mixing step, the organic acid reacts with the second mixture (or part of it).

In particular, during the second mixing step an organic solvent is added (to the second mixture) (so as to obtain the binding composition). Advantageously, during the adding step heat is supplied (to the second mixture and to the organic acid; in particular, to the second mixture, to the organic acid and to the organic solvent).

In particular, the second mixing step is subsequent to the first mixing step.

The first and the second mixing step can be (partially) simultaneous.

According to some embodiments, the addition step is (at least partially) previous to the second mixing step.

Advantageously, the organic solvent is a polar aprotic solvent. In particular, the organic solvent is selected from the group consisting of: cyclohexanone, cyclohexanol and a combination thereof.

Advantageously, the molar ratio between the organic acid and the organic solvent ranges from 1/5 (in particular, 1/4.5) to 1/3 (in particular 1/3.5).

According to some embodiments, the first mixing step is carried out at a temperature ranging from 140°C to 200°C. In particular, the first mixing step has a duration ranging from 5 minutes to 25 minutes (more precisely, 15 minutes). More precisely, once this time has elapsed, the epoxy resin is added (addition step).

According to some embodiments, the addition step is carried out at a temperature ranging from 120°C to 200°C. In particular, after the first mixing stage the temperature is lowered so as to be lower than 150°C (in particular, higher than 100°C), the epoxy resin is then added and subsequently the temperature is raised so as to be higher than 150°C (in particular, lower than 180°C) (until the epoxy resin dissolves).

Advantageously, during the addition step (after the epoxy resin has been added to the first mixture, in particular to the intermediate product), the temperature (of the second mixture) is maintained above 150°C (in particular, below 180°C) for a time ranging from 5 minutes (in particular, 10 minutes) to 25 minutes (in particular, 20 minutes).

Advantageously, the second mixing step is carried out at a temperature ranging from 100°C to 140°C. In particular, the second mixing step has a duration from 10 to 30 minutes.

Advantageously, the weight ratio between the polyamine and the epoxy resin is at least 5.9/1 (in particular, at least 5.94/1). More precisely, the weight ratio between the polyamine and the epoxy resin is up to 11/1 (in particular, up to 10.5/1).

Advantageously, the molar ratio between the polyamine and the epoxy compound ranges from 1.5/1 to 3/1. More precisely, the molar ratio between the polyamine and the epoxy compound ranges from 2/1 to 2.5/1.

According to some embodiments, the molar ratio between the polyamine and the organic solvent ranges from 1/6 to 1/9.

Advantageously, the weight of the epoxy compound ranges from 6% (in particular, 6.8%) to 8% (in particular, 7.5%) by weight with respect to the overall weight of the binding composition. According to some embodiments, the weight of the polyamine ranges from 30% (in particular, 34%) to 40% (in particular, 37%) by weight with respect to the overall weight of the binding composition. According to some embodiments, the weight of the epoxy resin ranges from 3% (in particular, 4%) to 8% (in particular, 6%) by weight with respect to the overall weight of the binding composition.

According to particular embodiments, the weight of the organic acid ranges from 4% (in particular, 6%) to 9% (in particular, 7.5%) by weight with respect to the overall weight of the binding composition. In particular, the weight of the organic solvent ranges from 40% (in particular 44%) to 60% (in particular, 58%) by weight with respect to the overall weight of the binding composition.

According to a second aspect of the present invention, a (bright) binding composition is provided obtainable (in particular, obtained) with the method of the first aspect of the present invention.

The binding composition according to the second aspect is used to prepare a (precious) metal-based formulation for decals.

According to a third aspect of the present invention, a (bright) formulation is provided for decals based on metals (in particular precious metals) comprising a binding composition according to the second aspect of the present invention.

The binding composition according to the second aspect is used to prepare a precious metal-based formulation for decals.

More precisely, the formulation for decals comprises from 17% to 27% (in particular, 20% to 25%), by weight, with respect to the overall weight of the formulation for decals, of the binding composition.

According to some embodiments, the formulation for decals comprises a second binder. More precisely, the formulation for decals comprises from 7% to 13% (in particular, 8% to 12%), by weight, with respect to the overall weight of the formulation for decals, of the second binder. According to some embodiments, the second binder comprises (is) a colophony solution (in particular, in English lavender oil).

In particular, the formulation further comprises at least one organic compound comprising a (precious) metal. In some cases, the formulation comprises at least two organic compounds, each comprising a relative (precious) metal. According to some embodiments, the (each) organic compound comprises (more precisely, is) a sulforesinate of a precious metal. Alternatively or in addition, the (each) organic compound comprises a precious metal selected from gold or silver.

In particular, the organic compound comprising a precious metal is selected from the group consisting of: gold sulforesinate, silver sulforesinate (and a combination thereof).

Advantageously, the organic compound content comprising a precious metal (or the sum of the organic compound contents comprising a precious metal) in the formulation for decals is such that the percentage by weight of the precious metal/s is at least 9% (in particular, up to 15%) with respect to the overall weight of the formulation for decals.

According to some embodiments, the formulation for decals comprises at least 6% (in particular, up to 15%) by weight with respect to the overall weight of the formulation for gold decals. Alternatively or additionally, the formulation for decals comprises at least 1% (in particular, up to 4%) by weight with respect to the overall weight of the formulation for silver decals.

According to some embodiments, the gold sulforesinate contains approximately 60% gold and the silver sulforesinate approximately 47% silver. Alternatively, it is also possible to use sulforesinates that contain different percentages of precious metal. For example, gold sulforesinate solutions with concentration of 30%, 40% or 45% gold, and silver sulforesinate solutions with concentration of 20%, 25% silver are commercially available.

The organic compounds comprising a precious metal allow the characteristic visual effect (in particular, colour and brightness) to be obtained on the decoration. According to alternative embodiments, instead of the organic compounds comprising a precious metal, organic compounds (alkoxides and/or resinates) containing other metals (like Fe, Mn, Co etc.) can be used. In these cases different visual effects will be obtained.

Advantageously, the formulation for decals further comprises a compound of a non-precious metal selected from the group consisting of: resinate, carboxylate, alkoxide (and a combination thereof). According to some specific embodiments, the compound of the non-precious metal is a resinate of a non-precious metal or a mixture of resinates of the non-precious metals.

In particular, the non-precious metal is selected from the group consisting of: elements like Ru, Os, Rh, Bi, Cr, V, Ni, Co, Fe, Sn, Zr, Ta, Si, B, Al (and a combination thereof).

In particular, the resinate is selected from the group consisting of: rhodium resinate, chromium resinate, silicon resinate, bismuth resinate, ruthenium resinate, osmium resinate, vanadium resinate (and a combination thereof).

In particular, the carboxylate is selected from the group consisting of: rhodium carboxylate, chromium carboxylate, silicon carboxylate, bismuth carboxylate, ruthenium carboxylate, osmium carboxylate, vanadium carboxylate (and a combination thereof).

In particular, the alkoxide is chosen from the group consisting of: rhodium alkoxide, chromium alkoxide, silicon alkoxide, bismuth alkoxide, ruthenium alkoxide, osmium alkoxide, vanadium alkoxide (and a combination thereof).

According to some embodiments, the weight of the non-precious metal compound (or the sum of the weights of said compounds) ranges from 2.0% to 8.0% (in particular, 2.5% to 6%) of the overall weight of the formulation for decals.

Advantageously, the formulation for decals further comprises at least one thixotropic agent. According to some embodiments, the formulation comprises from 3% to 4.5% by weight of the thixotropic agent with respect to the overall weight of the formulation for decals.

In particular, the thixotropic agent comprises (is) a hydrogenate derivative of castor oil. For example, the thixotropic agent is an amide, like the products sold under the name Flowtone ST and Crayvallac Super (Cray Valley) respectively, or ISCATIX ISP and ISCATIX SR (ISCA), or the analogous products supplied by Elementis Specialties.

Advantageously, the formulation for decals further comprises at least one anti-foaming agent. According to some embodiments, the formulation comprises from 1% to 4% by weight of the anti-foaming agent with respect to the overall weight of the formulation for decals.

According to some embodiments, the anti-foaming agent is a silicone-based oil like, for example, the solutions of polysiloxanes, Dynoadd F-404 (Dynea), PAT ADD AF 70 (Patcham), DAPRO DF 5300 (Elementis Specialties), Byk 065 (Byk).

The formulation for decals (as per the third aspect of the present invention) can be used (slightly varying the composition if necessary) to apply decals on both glass and ceramic.

According to a fourth aspect of the present invention, the use of the binding composition is provided according to the second aspect for the preparation of a (precious) metal-based formulation for decals (more precisely, a metal-based formulation for decals of the third aspect of the present invention).

In particular, the preparation of the formulation for decals entails a mixing step, during which (substantially at ambient temperature - approximately 25°C) at least one organic compound comprising a precious metal (according to some embodiments also non-precious) is mixed with a further organic solvent and the binding composition according to the second aspect of the present invention.

The further organic solvent is equal to or different from the organic solvent described relative to the first aspect of the present invention. In particular, the further organic solvent is selected from the group consisting of cyclohexanol, pine essential oil, lavender essential oil, eucalyptus essential oil, English lavender essential oil (and a combination thereof).

Advantageously, during the mixing step, at least one non-precious metal compound is mixed together with the organic compound comprising a precious metal, the solvent and the binding composition.

According to some embodiments, the mixture obtained during the mixing step is heated (advantageously to a temperature ranging from 65°C to 85°C). Advantageously, it is also added (at the latter temperature) to at least one thixotropic agent and then (after bringing the temperature of the mixture to roughly ambient temperature - approximately 25°C) to at least one anti-foaming agent so as to obtain the formulation for decals.

Advantageously, the organic compound comprising a precious metal and the compound of the non-precious metal are defined, independently of each other, as indicated for the third aspect of the present invention.

According to some specific embodiments (obviously also as regards the third aspect of the present invention), the sum of the weights of the binding composition, of the organic composition, of the resinate, of the thixotropic agent, of the anti-foaming agent and of the further organic solvent is at least 95% (in particular, at least 98%; more precisely, at least 99%) of the weight of the formulation for decals.

According to some embodiments, the formulation for decals is then ground to eliminate any irregularities.

In accordance with a fifth aspect of the present invention, a decal is provided for the production of a decoration on a substrate, said decal comprising a support (for example made of paper) and a layer for formation of the decoration (and a coating layer).

According to some embodiments, the layer for formation of the decoration comprises a binding composition according to the second aspect of the present invention.

Advantageously, the decal is obtained following the use as per the fourth aspect of the present invention.

In particular, the layer for formation of the decoration comprises (more precisely, consists of) the formulation for decals as per the third aspect of the present invention.

Further characteristics of the present invention will become clear from the following description of some merely illustrative and non-limiting examples.

### Example 1

### Production of the resins

Some experimental tests were carried out.

List of the epoxy resins tested:

**Table 1**

| **Resin** | **Name** | **Supplier** |
|---|---|---|
| **1** | GY 250 | Huntsman |
| **2** | YD 128 | Kukdo Chemical Co. |
| **3** | YD 017 | Kukdo Chemical Co. |
| **4** | YD 172 | Kukdo Chemical Co. |
| **5** | GT 7071 | Huntsman |

Further components used:
**Dimer diamine (polyamine):** Priamine 1074 (547 g/mol) (Croda Coatings and Polymers)
**Monomer epoxy (epoxy compound):** 1,4-Cyclohexanedimethanol diglycidyl ether (256.34 g/mol) (Sigma Aldrich), which has the following structural formula VI: 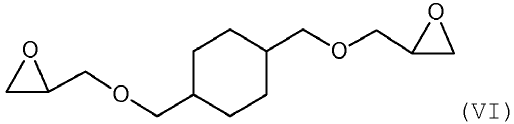
**Cyclohexanone:** (98.1 g/mol) (Sigma Aldrich)
**Cyclohexanol:** (100.16 g/mol) (Sigma Aldrich)
**Acetic acid:** (60.05 g/mol) (Sigma Aldrich)

### Procedure followed

Maintaining under constant stirring, components 1 and 2 were heated up to a temperature of 170°C and this temperature was maintained for 10 minutes. The heating was interrupted and the temperature left to drop to 140°C. Once at T = 140°C, component 3 was added. It was heated again up to T = 170°C and this temperature was maintained for 15 minutes. The heating was interrupted until a temperature of 120°C was reached. Once at T = 120°C, components 4, 5 and 6 were added. The temperature was maintained for 20 minutes. It was brought back to 100% by weight with cyclohexanone.

### Formulations tested

a)

| | | |
|---|---|---|
| 1 | Dimer diamine | 35.1% |
| 2 | Monomer epoxy | 7.0% |
| 3 | Resin 1 | 4.9% |
| 4 | Cyclohexanone | 23.0% |
| 5 | Cyclohexanol | 23.0% |
| 6 | Acetic acid | 7.0% |

b)

| | | |
|---|---|---|
| 1 | Dimer diamine | 35.1% |
| 2 | Monomer epoxy | 7.4% |
| 3 | Resin 1 | 3.5% |
| 4 | Cyclohexanone | 23.5% |
| 5 | Cyclohexanol | 23.5% |
| 6 | Acetic acid | 7.0% |

c)

| | | |
|---|---|---|
| 1 | Dimer diamine | 35.1% |
| 2 | Monomer epoxy | 7.0% |
| 3 | Resin 2 | 5.9% |
| 4 | Cyclohexanol | 22.5% |
| 5 | Cyclohexanone | 22.5% |
| 6 | Acetic acid | 7.0% |

d)

| | | |
|---|---|---|
| 1 | Dimer diamine | 35.1% |
| 2 | Monomer epoxy | 7.0% |
| 3 | Resin 3 | 5.9% |
| 4 | Cyclohexanol | 22.5% |
| 5 | Cyclohexanone | 22.5% |
| 6 | Acetic acid | 7.0% |

e)

| | | |
|---|---|---|
| 1 | Dimer diamine | 35.1% |
| 2 | Monomer epoxy | 7.0% |
| 3 | Resin 4 | 5.9% |
| 4 | Cyclohexanone | 22.5% |
| 5 | Cyclohexanol | 22.5% |
| 6 | Acetic acid | 7.0% |

f)

| | | |
|---|---|---|
| 1 | Dimer diamine | 35.1% |
| 2 | Monomer epoxy | 7.0% |
| 3 | Resin 5 | 5.9% |
| 4 | Cyclohexanone | 22.5% |
| 5 | Cyclohexanol | 22.5% |
| 6 | Acetic acid | 7.0% |

### Example 2

### Use of the resins produced (example 1) for the production of a paste for decals

**Table 2**

| **Components** | **Quantity (%)** |
|---|---|
| Gold sulforesinate solution (Au 30%) | 32.0 |
| Silver sulforesinate solution (Ag 20%) | 12.0 |
| Rhodium resinate solution (Rh 5%) | 1.0 |
| Chromium resinate solution (Cr 6%) | 1.0 |
| Si resinate solution (Si 13%) | 0.5 |
| Bismuth resinate solution (Bi 8%) | 1.0 |
| Colophony in English lavender essential oil | 10.0 |
| Lavender essential oil | 7.5 |
| Cyclohexanol | 7.5 |
| Resin (#) in cyclohexanone | 22.0 |
| Thixotropic agent | 2.5 |
| Anti-foaming agent | 3.0 |

All the components of the usable formulations were weighed and mixed except for the thixotropic agent and the anti-foaming agent.

Each formulation was maintained under stirring and heated to a temperature of 80°C. Once this temperature had been reached, the thixotropic agent was added in the quantity given in the formulation. Maintaining under constant and thorough stirring, the heating was interrupted and the formulation was left to cool. Once the formulation returned to ambient temperature, the anti-foaming agent was added.

The formulation was maintained under constant thorough stirring for at least 15 minutes.

Once the stirring phase had been completed, after a few hours' wait, the grinding process was initiated.

The formulations were then printed with a 120 thread nylon fabric on a paper support, dried and coated with collodion 0693 (Ruger & Guenzel). After drying the coating, the decoration was applied on the desired support and thermally treated. The application of the decoration on the support entailed the use of the following instruments: a container containing water with dimension sufficient for immersion of the decal (if possible use demineralized water), a soft flexible rubber spatula to use for bonding the decal to the surface of the support, a damp cloth and a pair of scissors.

To apply the decal on the support, firstly the part to be transferred was cut out and said part was immersed in water for at least 2 minutes. Once said period had elapsed, the decal was removed from the water and, holding it between the fingers, the part containing the coating was moved relative to the paper by means of a sliding movement. The part of the decal containing the coating, protruding in the position chosen for the application, was laid on the application surface. Keeping the portion with the coating firmly in position, the paper continued to be moved out from below by means of a sliding movement until it was removed. The rubber spatula was used to eliminate the water and any air bubbles under the film with the coating. The support was then fired.

Different properties of all the pastes produced for decals were analysed to establish if the various resins could be used or not.

**Table 3**

| **Resin solution #** | **a** | **b** | **C** |
|---|---|---|---|
| **Production process** | standard | standard | standard |
| **Printing properties (120 nylon thread frame)** | Uniform non-sticky print | Uniform non-sticky print | Uniform non-sticky print |
| **Drying time (minutes)** | 75 | 75 | 60 |
| **Dissolution in water (control after 30 minutes)** | Does not dissolve | Does not dissolve | Does not dissolve |
| **Elasticity of the decal (assessed during the application stage)** | standard | standard | standard |
| **Result of the firing (T = 780°C)** | Very bright and yellow | Very bright and yellow | Very bright and yellow |

**Table 4**

| **Resin solution #** | **d** | **e** | **F** |
|---|---|---|---|
| **Production process** | standard | standard | standard |
| **Printing process (120 nylon thread frame)** | Uniform non-sticky printing | Uniform non-sticky printing | Uniform non-sticky printing |
| **Drying time (minutes)** | 75 | 75 | 75 |
| **Dissolution in water (control after 30 minutes)** | Does not dissolve | Does not dissolve | Does not dissolve |
| **Elasticity of the decal (assessed during the application phase)** | standard | standard | standard |
| **Result of firing (T = 780°C)** | Very bright and yellow | Very bright and yellow | Very bright and yellow |

The results obtained demonstrate that all the pastes tested can be used for decorative purposes, having shown surprisingly good properties.

### Example 3

The following formulation was also tested according to the procedure reported below.
g)

| | | |
|---|---|---|
| 1 | Priamine 1074 (1071 o 1073) | 35.9% |
| 2 | Diglycidyl ether | 10.3% |
| 3 | Cyclohexanone | 4.1% |
| 4 | Acetic acid | 7.7% |

The components 1 and 2 were mixed under stirring, heating up to 150°C. Once this temperature was reached, it was maintained for 30 minutes. Subsequently, it was left to cool, always under stirring, to a temperature of 100°C. At this point, components 3 and 4 were added. It was heated again up to 120°C and said temperature was maintained for 20 minutes. It was brought back to 100% by weight with cyclohexanone.

For preparation of the pastes for decals and the relative tests, the procedure described in example 2 was used.

The results for the drying times, printability, colour and reactivity are the same independently of the Priamine used.
Reactivity: good = standard
Printability: good
Drying times: 90 minutes
Colour and brightness of the firing: good

Comparing the tests of examples 1 and 2 with those of example 3, it was experimentally observed that the addition of the epoxy resin (tests of examples 1 and 2) surprisingly allows not only a much more uniform metallic film to be obtained but also drying times even shorter than those of the resin of example 3, which are already good. A more uniform metallic film allowed more intense and above all much brighter colours to be obtained, considerably improving the decorative quality of the formulation of the paste for decals.

## Claims

1. A method of preparing a binding composition for a formulation for metal-based, in particular precious metal-based, decals; the method comprises a first mixing step, during which at least a polyamine and at least an epoxy compound with at least two epoxy functional groups are mixed with one another; said polyamine being C₂₅-C₄₀ and having at least two amine functional groups; and an addition step, during which an epoxy resin is added.

2. A method according to claim 1, wherein the weight ratio between the polyamine and the epoxy resin is at least 5.9/1 (in particular, up to 11/1); in particular, the molar ratio between the polyamine and the epoxy compound is from 1.5/1 to 3/1; said polyamine being C₃₀-C₄₀.

3. A method according to one of the foregoing claims and comprising a second mixing step, which is subsequent to the first mixing step and during which an organic acid, which is monocarboxylic and C₁-C₈, and an organic solvent are added (so as to obtain the binding composition); the addition step is at least partially subsequent to the first mixing step and at least partially prior to the second mixing step.

4. A method according to claim 3, wherein, in particular, the second mixing step is carried out at a temperature from 100°C to 140°C for an amount of time from 10 to 30 minutes.

5. A method according to claim 3 or 4, wherein the organic solvent is a polar aprotic solvent and, in particular, is chosen in the group consisting of: cyclohexanone, cyclohexanol, and a combination thereof; the molar ratio between the polyamine and the organic solvent is from 1/6 to 1/9; the molar ratio between the polyamine and the epoxy compound is from 2/1 to 2.5/1; the weight ratio between the polyamine and the epoxy resin is up to 10.5/1; in particular, the monocarboxylic acid is acetic acid.

6. A method according to one of the foregoing claims, wherein the weight of the epoxy compound ranges from 6% (in particular, from 6.8%) to 8% (in particular, to 7.5%) by weight relative to the total weight of the binding composition; the weight of the polyamine ranges from 30% (in particular, from 34%) to 40% (in particular, to 37%) by weight relative to the total weight of the binding composition; the weight of the epoxy resin ranges from 3% (in particular, from 4%) to 8% (in particular, to 6%) by weight relative to the total weight of the binding composition; in particular, the weight of the organic acid ranges from 4% (in particular, from 6%) to 9% (in particular, to 7.5%) by weight relative to the total weight of the binding composition; in particular, the weight of the organic solvent ranges from 40% (in particular, from 44%) to 60% (in particular, to 58%) by weight relative to the total weight of the binding composition.

7. A method according to one of the foregoing claims, wherein the first mixing step is carried out at a temperature ranging from 14.0°C to 200°C (in particular, for an amount of time ranging from 5 minutes to 25 minutes); the addition step is carried out at a temperature ranging from 120°C to 200°C; in particular, after the first mixing step, the temperature is lowered so as to be lower than 150°C (in particular, higher than 100°C), then the epoxy resin is added and afterwards the temperature is raised so as to be higher than 150°C (in particular, lower than 180°C; in particular, for an amount of time ranging from 5 to 25 minutes).

8. A method according to one of the foregoing claims, wherein the epoxy resin is a bisphenol A epoxy resin; in particular, the addition step is at least partially subsequent to the first mixing step and at least partially prior to the second mixing step.

9. A method according to one of the foregoing claims, wherein the epoxy resin is chosen within the group consisting of: GT 7072 (Huntsman), GY 298 (Huntsman), GY 250 (Huntsman), YD 128 (Kukdo Chemical Co.), YD 017 (Kukdo Chemical Co.), YD172 (Kukdo Chemical Co.), GT 7071 (Huntsman).

10. A method according to one of the foregoing claims, wherein the epoxy compound has a formula V: 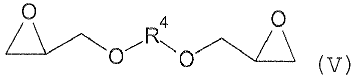 wherein R⁴ is C₃-C₁₅; the polyamine has two primary amine groups; in particular, the epoxy compound is 1,4-cyclohexanedimethanol diglycidyl ether.

11. A method according to one of the foregoing claims, wherein the polyamine comprises a mixture of diamines and, in particular, is chosen in the group consisting of: Priamine 1074, Priamine 1071, Priamine 1073, and a combination thereof.

12. A binding composition that can be obtained with the method according to one of the foregoing claims.

13. A formulation for metal-based (in particular precious metal-based) decals comprising a binding composition according to claim 12.

14. A use of a binding composition according to claim 12 to prepare a formulation for metal-based (in particular precious metal-based) decals.

15. A use according to claim 14 and comprising a step of mixing at least one organic compound comprising a metal (in particular, a precious metal) with an organic solvent and the binding composition.

16. A use of a binding composition according to claim 12 to prepare decals; in particular, the use involves preparing a formulation for metal-based (in particular precious metal-based) decals according to claim 13.

17. A decal for the production of a decoration on a substrate; the decal comprising a support, a layer for the formation of the decoration and a coating layer; said layer for the formation of the decoration comprises a binding composition according to claim 12.

## Patentansprüche

1. Ein Verfahren zur Herstellung einer Bindemittelzusammensetzung für eine Formulierung für Abziehbilder auf Metallbasis, insbesondere auf Edelmetallbasis; wobei das Verfahren einen ersten Mischschritt, bei dem mindestens ein Polyamin und mindestens eine Epoxyverbindung mit mindestens zwei epoxyfunktionellen Gruppen miteinander gemischt werden; wobei das Polyamin C₂₅-C₄₀ ist und mindestens zwei aminfunktionelle Gruppen aufweist; und einen Zugabeschritt, bei dem ein Epoxidharz hinzugefügt wird, umfasst.

2. Ein Verfahren gemäß Anspruch 1, wobei das Gewichtsverhältnis zwischen dem Polyamin und dem Epoxyverbindung mindestens 5,9/1 (insbesondere bis zu 11/1) beträgt; inbesondere beträgt das Molverhältnis zwischen dem Polyamin und der Epoxyverbindung 1,5/1 bis 3/1; wobei das Polyamin C₃₀-C₄₀ ist.

3. Ein Verfahren gemäß einem der vorstehenden Ansprüche, umfassend einen zweiten Mischschritt, welcher nach dem ersten Mischschritt erfolgt und bei dem eine organische Säure, welche Monocarbonsäure und C₁-C₈ ist, und ein organisches Lösungsmittel hinzugefügt werden (um die Bindemittelzusammensetzung zu erhalten); wobei der Zugabeschritt zumindest teilweise nach dem ersten Mischschritt und zumindest teilweise vor dem zweiten Mischschritt erfolgt.

4. Ein Verfahren gemäß Anspruch 3, wobei insbesondere der zweite Mischschritt bei einer Temperatur von 100°C bis 140°C über eine Zeitdauer von 10 bis 30 Minuten durchgeführt wird.

5. Ein Verfahren gemäß Anspruch 3 oder 4, wobei das organische Lösungsmittel ein polares aprotisches Lösungsmittel ist und insbesondere aus der Gruppe bestehend aus: Cyclohexanon, Cyclohexanol und einer Kombination davon ausgewählt ist; wobei das Molverhältnis zwischen dem Polyamin und dem organischen Lösungsmittel 1/6 bis 1/9 beträgt; wobei das Molverhältnis zwischen dem Polyamin und der Epoxidverbindung 2/1 bis 2,5/1 beträgt; wobei das Gewichtsverhältnis zwischen dem Polyamin und dem Epoxidharz bis zu 10,5/1 beträgt; insbesondere ist die Monocarbonsäure Essigsäure.

6. Ein Verfahren gemäß einem der vorstehenden Ansprüche, wobei das Gewicht der Epoxidverbindung im Bereich von 6 Gew.-% (insbesondere von 6,8 Gew.-%) bis 8 Gew.-% (insbesondere bis 7,5 Gew.-%) liegt, bezogen auf das Gesamtgewicht der Bindemittelzusammensetzung; wobei das Gewicht des Polyamins im Bereich von 30 Gew.-% (insbesondere von 34 Gew.-%) bis 40 Gew.-% (insbesondere bis 37 Gew.-%) liegt, bezogen auf das Gesamtgewicht der Bindemittelzusammensetzung; wobei das Gewicht des Epoxidharzes im Bereich von 3 Gew.-% (insbesondere von 4 Gew.-%) bis 8 Gew.-% (insbesondere bis 6 Gew.-%) liegt, bezogen auf das Gesamtgewicht der Bindemittelzusammensetzung; insbesondere liegt das Gewicht der organischen Säure im Bereich von 4 Gew.-% (insbesondere von 6 Gew.-%) bis 9 Gew.-% (insbesondere 7,5 Gew.-%), bezogen auf das Gesamtgewicht der Bindemittelzusammensetzung; insbesondere liegt das Gewicht des organischen Lösungsmittels im Bereich von 40 Gew.% (insbesondere von 44 Gew.-%) bis 60 Gew.-% (insbesondere bis 58 Gew.-%), bezogen auf das Gesamtgewicht der Bindemittelzusammensetzung.

7. Ein Verfahren gemäß einem der vorstehenden Ansprüche, wobei der erste Mischschritt bei einer Temperatur im Bereich von 140°C bis 200°C durchgeführt wird (insbesondere über eine Zeitdauer im Bereich von 5 Minuten bis 25 Minuten); wobei der Zugabeschritt bei einer Temperatur im Bereich von 120°C bis 200°C durchgeführt wird; insbesondere wird die Temperatur nach dem ersten Mischschritt verringert, sodass diese weniger als 150°C (insbesondere mehr als 100°C) beträgt, dann wird das Epoxidharz hinzugefügt und anschließend wird die Temperatur erhöht, sodass diese mehr als 150°C (insbesondere weniger als 180°C; insbesondere über eine Zeitdauer im Bereich von 5 Minuten bis 25 Minuten) beträgt.

8. Ein Verfahren gemäß einem der vorstehenden Ansprüche, wobei das Epoxidharz ein Bisphenol A Epoxidharz ist; insbesondere erfolgt der Zugabeschritt zumindest teilweise nach dem ersten Mischschritt und zumindest teilweise vor dem zweiten Mischschritt.

9. Ein Verfahren gemäß einem der vorstehenden Ansprüche, wobei das Epoxidharz aus der Gruppe bestehend aus GT 7072 (Huntsman), GY 298 (Huntsman), GY 250 (Huntsman), YD 128 (Kukdo Chemical Co.), YD 017 (Kukdo Chemical Co.), YD 172 (Kukdo Chemical Co.), GT 7071 (Huntsman) ausgewählt ist.

10. Ein Verfahren gemäß einem der vorstehenden Ansprüche, wobei die Epoxidverbindung eine Formel V aufweist: 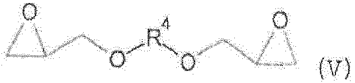 wobei R⁴ für C₃-C₁₅ steht; das Polyamin zwei primäre Amingruppen aufweist; insbesondere ist die Epoxidverbindung 1,4-Cyclohexandimethanol-Diglycidylether.

11. Ein Verfahren gemäß einem der vorstehenden Ansprüche, wobei das Polyamin ein Gemisch aus Diaminen umfasst und insbesondere aus der Gruppe bestehend aus: Priamine 1074, Priamine 1071, Priamine 1073 und einer Kombination davon ausgewählt ist.

12. Eine Bindemittelzusammensetzung, welche durch das Verfahren gemäß einem der vorstehenden Ansprüche erhältlich ist.

13. Eine Formulierung für Abziehbilder auf Metallbasis (insbesondere auf Edelmetallbasis), umfassend eine Bindemittelzusammensetzung gemäß Anspruch 12.

14. Verwendung einer Bindemittelzusammensetzung gemäß Anspruch 12, um eine Formulierung für Abziehbilder auf Metallbasis (insbesondere auf Edelmetallbasis) herzustellen.

15. Verwendung gemäß Anspruch 14, umfassend einen Mischschritt von mindestens einer organischen Verbindung, umfassend ein Metall (insbesondere ein Edelmetall), mit einem organischen Lösungsmittel und der Bindemittelzusammensetzung.

16. Verwendung einer Bindemittelzusammensetzung gemäß Anspruch 12, um Abziehbilder herzustellen; insbesondere beinhaltet die Verwendung das Herstellen einer Formulierung für Abziehbilder auf Metallbasis (insbesondere auf Edelmetallbasis) gemäß Anspruch 13.

17. Ein Abziehbild für die Herstellung eines Dekors auf einem Substrat; wobei das Abziehbild einen Träger, eine Schicht für die Bildung des Dekors und eine Beschichtungsschicht umfasst; wobei die Schicht für die Bildung des Dekors eine Bindemittelzusammensetzung gemäß Anspruch 12 umfasst.

## Revendications

1. Procédé de préparation d'une composition liante destinée à une formulation pour décalcomanies à base de métaux, en particulier à base de métaux précieux, le procédé comprenant une première étape de mélange, au cours de laquelle au moins une polyamine et au moins un composé époxy comportant au moins deux groupes fonctionnels époxy sont mélangés l'un avec l'autre ; ladite polyamine étant en C₂₅-C₄₀ et comportant au moins deux groupes fonctionnels amine ; et une étape d'addition au cours de laquelle une résine époxy est ajoutée.

2. Procédé selon la revendication 1, dans lequel le rapport en poids entre la polyamine et la résine époxy est d'au moins 5,9/1 (en particulier jusqu'à 11/1) ; en particulier, le rapport molaire entre la polyamine et le composé époxy va de 1,5/1 à 3/1, ladite polyamine étant en C₃₀-C₄₀.

3. Procédé selon l'une des revendications précédentes et comprenant une seconde étape de mélange qui est consécutive à la première étape de mélange et au cours de laquelle un acide organique, qui est monocarboxylique et en C₁-C₈, et un solvant organique sont ajoutés (de manière à obtenir la composition liante) ; l'étape d'addition est au moins partiellement postérieure à la première étape de mélange et au moins partiellement antérieure à la seconde étape de mélange.

4. Procédé selon la revendication 3, dans lequel, en particulier, la seconde étape de mélange est réalisée à une température allant de 100 °C à 140 °C pendant une durée de 10 à 30 minutes.

5. Procédé selon la revendication 3 ou 4, dans lequel le solvant organique est un solvant aprotique polaire et, en particulier, est choisi dans le groupe constitué par : cyclohexanone, cyclohexanol, et une combinaison de ceux-ci ; le rapport molaire entre la polyamine et le solvant organique va de 1/6 à 1/9 ; le rapport molaire entre la polyamine et le composé époxy va de 2/1 à 2,5/1 ; le rapport en poids entre la polyamine et la résine époxy va jusqu'à 10,5/1 ; en particulier, l'acide monocarboxylique est l'acide acétique.

6. Procédé selon l'une des revendications précédentes, dans lequel le poids du composé époxy va de 6 % (en particulier de 6,8 %) à 8 % (en particulier à 7,5 %) en poids par rapport au poids total de la composition liante ; le poids de la polyamine va de 30 % (en particulier de 34 %) à 40 % (en particulier à 37 %) en poids par rapport au poids total de la composition liante ; le poids de la résine époxy va de 3 % (en particulier de 4 %) à 8 % (en particulier à 6 %) en poids par rapport au poids total de la composition liante ; en particulier, le poids de - l'acide organique va de 4 % (en particulier de 6 %) à 9 % (en particulier à 7,5 %) en poids par rapport au poids total de la composition liante ; en particulier, le poids du solvant organique va de 40 % (en particulier de 44 %) à 60 % (en particulier à 58 %) en poids par rapport au poids total de la composition liante.

7. Procédé selon l'une des revendications précédentes, dans lequel la première étape de mélange est réalisée à une température allant de 140 °C à 200 °C (en particulier pour une durée allant de 5 minutes à 25 minutes) ; l'étape d'addition est réalisée à une température allant de 120 °C à 200 °C ; en particulier, après la première étape de mélange, la température est abaissée de manière à être inférieure à 150 °C (en particulier, supérieure à 100 °C), puis la résine époxy est ajoutée et, après cela, la température est augmentée pour être supérieure à 150 °C (en particulier, inférieure à 180 °C ; en particulier pendant une durée allant de 5 à 25 minutes).

8. Procédé selon l'une des revendications précédentes, dans lequel la résine époxy est une résine époxy de bisphénol A ; en particulier, l'étape d'addition est au moins partiellement postérieure à la première étape de mélange et au moins partiellement antérieure à la seconde étape de mélange.

9. Procédé selon l'une des revendications précédentes, dans lequel la résine époxy est choisie dans le groupe constitué par : GT 7072 (Huntsman), GY 298 (Huntsman), GY 250 (Huntsman), YD 128 (Kukdo Chemical Co.), YD 017 (Kukdo Chemical Co.), YD172 (Kukdo Chemical Co.), GT 7071 (Huntsman).

10. Procédé selon l'une des revendications précédentes, dans lequel le composé époxy a pour formule V : 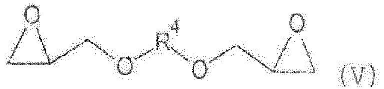 dans laquelle R⁴ est en C₃-C₁₅ ; la polyamine a deux groupes amine primaires ; en particulier, le composé époxy est le 1,4-cyclohexanediméthanol diglycidyl éther.

11. Procédé selon l'une des revendications précédentes, dans lequel la polyamine comprend un mélange de diamines, et en particulier, est choisie dans le groupe constitué par : Priamine 1074, Priamine 1071, Priamine 1073, et une combinaison de celles-ci.

12. Composition liante pouvant être obtenue par le procédé selon l'une des revendications précédentes.

13. Formulation pour des décalcomanies à base de métaux (en particulier à base de métaux précieux) comprenant une composition liante selon la revendication 12.

14. Utilisation d'une composition liante selon la revendication 12 afin de préparer une formulation pour des décalcomanies à base de métaux (en particulier à base de métaux précieux).

15. Utilisation selon la revendication 14 et comprenant une étape de mélange d'au moins un composé organique comprenant un métal (en particulier un métal précieux) avec un solvant organique et la composition liante.

16. Utilisation d'une composition liante selon la revendication 12 pour préparer des décalcomanies ; en particulier, ladite utilisation implique la préparation d'une formulation pour des décalcomanies à base de métaux (en particulier à base de métaux précieux) selon la revendication 13.

17. Décalcomanie pour la production d'une décoration sur un substrat ; la décalcomanie comprenant un support, une couche pour la formation de la décoration et une couche de revêtement ; ladite couche pour la formation de la décoration comprend une composition liante selon la revendication 12.
